# EUROPÄISCHE PATENTANMELDUNG

(11) **EP 2 604 905 A1**
(43) Veröffentlichungstag der Anmeldung: **19.06.2013**
(21) Anmeldenummer: 12181083.2
(22) Anmeldetag: 20.08.2012
(51) Int. Cl.: F16L 59/147, F16L 59/02

(54) **Isolierte Rohrleitung**

(30) Priorität: 14.12.2011 DE 202011052294 U
(71) Anmelder: herotec GmbH Flächenheizung, D-59227 Ahlen-Vorhelm (DE)
(72) Erfinder: Heuser, Thomas, 59320 Ennigerloh (DE)
(74) Vertreter: Meinke, Dabringhaus und Partner GbR

(57) **Zusammenfassung**

Die Erfindung betrifft eine Rohrleitung (1), insbesondere für den Transport von Heizungs- und Kühlflüssigkeit, mit wenigstens einem von einer Isolierung (2) und einem Mantelrohr (3) umschlossenen Rohr (4). Um eine Rohrleitung (1) zur Verfügung zu stellen, die einfach und kostengünstig herstellbar ist, sieht die Erfindung vor, dass das Rohr (4) als Verbundrohr und die Isolierung (2) aus mindestens zwei miteinander verbundenen Isolierteilen (5,6) gebildet ist.

## Beschreibung

Die Erfindung betrifft eine Rohrleitung, insbesondere für den Transport von Heizungs- und Kühlflüssigkeit, mit wenigstens einer von einer Isolierung und einem Mantelrohr umschlossenen Rohr.

Zudem betrifft die Erfindung ein Verfahren zur Herstellung der Rohrleitung.

Rohrleitungen der eingangs genannten Art finden beispielsweise bei Fernwärmeleitungen Verwendung. Hierzu bestehen üblicherweise die Rohrleitungen aus einem Rohr, welches von einer Isolierung und einem Mantelrohr umschlossen ist. Zum Zwecke der Rohrdämmung ist dabei die Isolierung vorgesehen, die vorzugsweise aus PUR-Hartschaum ist und das Rohr vollflächig umschließt. Um die Isolierung wiederum nach außen gegen mechanische oder witterungsbedingte Einflüsse zu schützen, sind die aus dem Stand der Technik bekannten Rohrleitungen mit einem Mantelrohr versehen, das die Isolierung vollflächig umschließt. Die Mantelrohre werden dabei aus einem Werkstoff gefertigt, der sich durch besonders vorteilhafte mechanische und thermische Eigenschaften auszeichnet. Als probater Werkstoff hat sich beispielsweise der Werkstoff PE erwiesen.

Dennoch weisen die bekannten Rohrleitungen nach wie vor Nachteile auf, die insbesondere die aufwändige Herstellung und Verarbeitung der Rohrleitung betreffen.

Es ist deshalb Aufgabe der vorliegenden Erfindung, eine Rohrleitung der eingangs genannten Art zur Verfügung zu stellen, die einfach und kostengünstig herstellbar ist.

Diese Aufgabe wird mit den Merkmalen des Anspruches 1 gelöst. Vorteilhafte Ausgestaltungen der Erfindung ergeben sich aus den Unteransprüchen.

Mit einer Rohrleitung der eingangs genannten Art wird diese Aufgabe gemäß der Erfindung dadurch gelöst, dass das Rohr als Verbundrohr und die Isolierung aus mindestens zwei miteinander verbundenen Isolierteilen gebildet ist.

Kernidee der Erfindung ist es, die Isolierung aus vorgefertigten Isolierteilen zusammenzusetzen. Somit entfällt die Herstellung einer einteiligen Isolierung, was mit weniger konstruktiv aufwändigen Maßnahmen einhergeht. Als Isolierteile kommen beispielsweise Isolierschalen aus PUR-Hartschaum in Betracht, die ggf. miteinander verklebt werden.

Um die Isolierteile an das Rohr und an das Mantelrohr anzupassen, ist es dabei von Vorteil, dass das Isolierteil in Form einer Zylinderhälfte gebildet ist und mit einer Längsrinne versehen ist. Bei den Isolierteilen handelt es sich also um zueinander korrespondierende Bauteile, die zueinander korrespondierende Längsrinnen aufweisen.

Des Weiteren kann es von Vorteil sein, dass das Verbundrohr als Alu-Verbundrohr ausgebildet ist. Ein Alu-Verbundrohr vereint die Vorteile von Kunststoff und Aluminium hinsichtlich chemischer Beständigkeit und Formstabilität.

Eine praktikable Variante der Erfindung kann vorsehen, dass in das Rohr ein Kupfer- oder Al-Band, ein Datenkabel, eine Begleitheizung oder dergl. integriert ist. Die Verwendung eines Al-Bandes als Ausgangsmaterial erlaubt die Herstellung eines Rohres mit verbesserten thermischen und Haltbarkeitseigenschaften. Das Al-Band wird dabei längs überlappt verschweißt, was eine dichte und dauerhafte Rohrzusammenfügung ermöglicht. Ein Mehrschichtverbundrohr ist in der Druckschrift DE 20 2005 016 696 U1 offenbart.

Eine weitere vorteilhafte Ausgestaltung der Erfindung sieht vor, dass zwischen Mantelrohr und Isolierung eine Sauerstoffsperrschicht ausgebildet ist. Als Sauerstoffsperrschicht kann insbesondere eine Alufolie dienen, die die Diffusion von Sauerstoff blockiert und die Isolierung vollflächig umschließt.

Zudem sieht die Erfindung ein Verfahren zur Herstellung der Rohrleitung vor, das sich durch eine konstruktiv einfache Vorgehensweise auszeichnet. Hierzu werden die Isolierteile zunächst in herkömmlicher Weise hergestellt. Danach wird in eine der Längsrinnen eines Isolierteiles ein Rohr eingesetzt und danach die beiden Isolierteile zusammengefügt. In einem weiteren Verfahrensschritt erfolgt die Ummantelung der zusammengefügten Isolierteile mit dem Mantelrohr, wobei das Mantelrohr mittels einer Schweißnaht geschlossen wird und die Ummantelung in herkömmlicher Weise erfolgen kann.

Eine vorteilhafte Ausgestaltung der Erfindung sieht dabei vor, dass das Gebilde aus den Isolierteilen und dem Rohr mit einer Sauerstoffsperrschicht umschlossen wird.

Alternativ sieht die Erfindung ein Verfahren vor, bei dem die Schweißnaht eines schon bestehenden Mantelrohres getrennt wird, um im Rahmen eines weiteren Verfahrensschrittes die Einsetzung eines Rohres in eine der Längsrinnen eines Isolierteiles folgen zu lassen. Der letzte Schritt der Herstellung der Rohrleitung stellt schließlich die Ummantelung und das Schließen des Mantelrohres mittels der Schweißnaht dar.

Eine praktikable Variante der Erfindung sieht vor, das die zusammengefügten Isolierteile von einer Sauerstoffsperrschicht umschlossen werden. Im Folgenden wird die Erfindung anhand der Zeichnungen näher erläutert. Es zeigt in schematischer Darstellung:
- Fig. 1: eine Rohrleitung gemäß der Erfindung,
- Fig. 2: eine weitere Ausführungsform der erfindungsgemäßen Rohrleitung,
- Fig. 3: eine Explosionsdarstellung einer ersten Ausführungsform der erfindungsgemäßen Rohrleitung,
- Fig. 4: eine Explosionsdarstellung einer zweiten Ausführungsform der erfindungsgemäßen Rohrleitung und
- Fig. 5: Schritte der Herstellung der erfindungsgemäßen Rohrleitung.

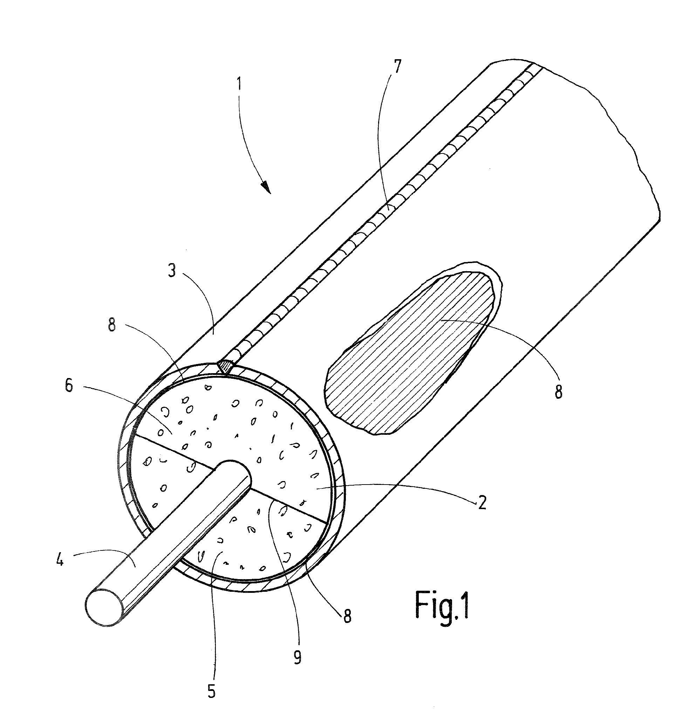

- Fig. 1: zeigt eine Rohrleitung, die mit dem Bezugszeichen 1 versehen ist.

Die in Fig. 1 dargestellte Rohrleitung 1 wird beispielsweise für den Transport von Heizungs- und Kühlflüssigkeit eingesetzt.

Die Rohrleitung 1 weist eine Isolierung 2 auf, die vollflächig von dem Mantelrohr 3 umschlossen ist. Als Werkstoff für die Isolierung 2 eignet sich besonders PUR-Schaum. Zwischen dem Mantelrohr 3 und der Isolierung 2 ist eine Sauerstoffsperrschicht 8 in Gestalt einer Alufolie angeordnet. Zur Veranschaulichung der Anordnung der Sauerstoffsperrschicht 8 ist in Fig. 1 ein in dem Mantelrohr 3 nicht vorhandener Durchbruch zeichnerisch dargestellt.

Wie aus Fig. 1 weiter hervorgeht, verläuft mittig und längs der Rohrleitung 1 das Rohr 4, durch das die Heizungs- und Kühlflüssigkeit fließt. Die Isolierung 2 ist nicht einteilig ausgebildet. Vielmehr setzt sich die Isolierung 2 aus zwei Isolierteilen 5, 6 in Form von Zylinderhälften zusammen, die in der in Fig. 1 dargestellten Ausführungsform der Rohrleitung 1 fest miteinander, beispielsweise durch Verklebung, verbunden sind, so dass die Trennfuge 9 resultiert. Das Mantelrohr 3 ist, wie Fig. 1 weiter zeigt, an der Schweißnaht 7 verschweißt.

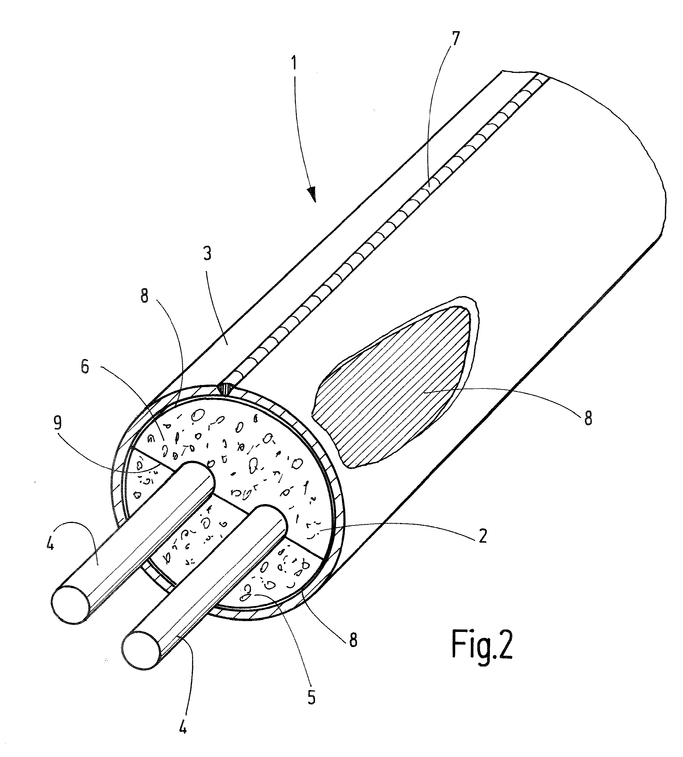

In Fig. 2 ist eine weitere Ausführungsform der Rohrleitung 1 dargestellt, wobei alle funktionsmäßig gleichen Teilelemente in Fig. 2 mit dem gleichen Bezugszeichen wie in der Ausführungsform gemäß Fig. 1 versehen sind. Die in Fig. 2 gezeigte Ausführungsform der Rohrleitung 1 zeichnet sich dadurch aus, dass zwei Rohre 4 vorgesehen sind, die beabstandet und parallel zueinander, d.h. nicht versetzt zueinander, angeordnet sind.

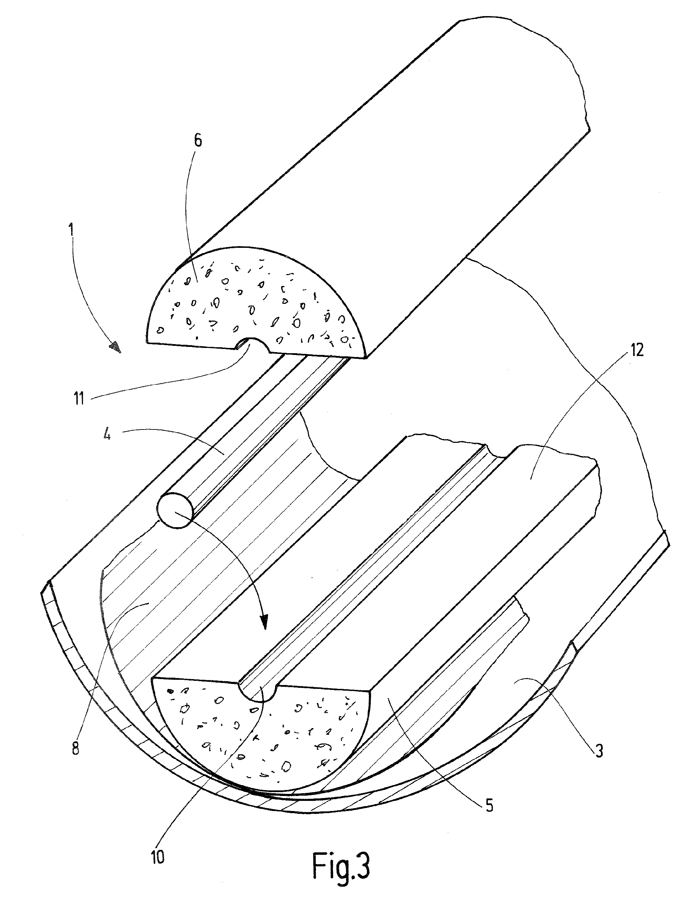

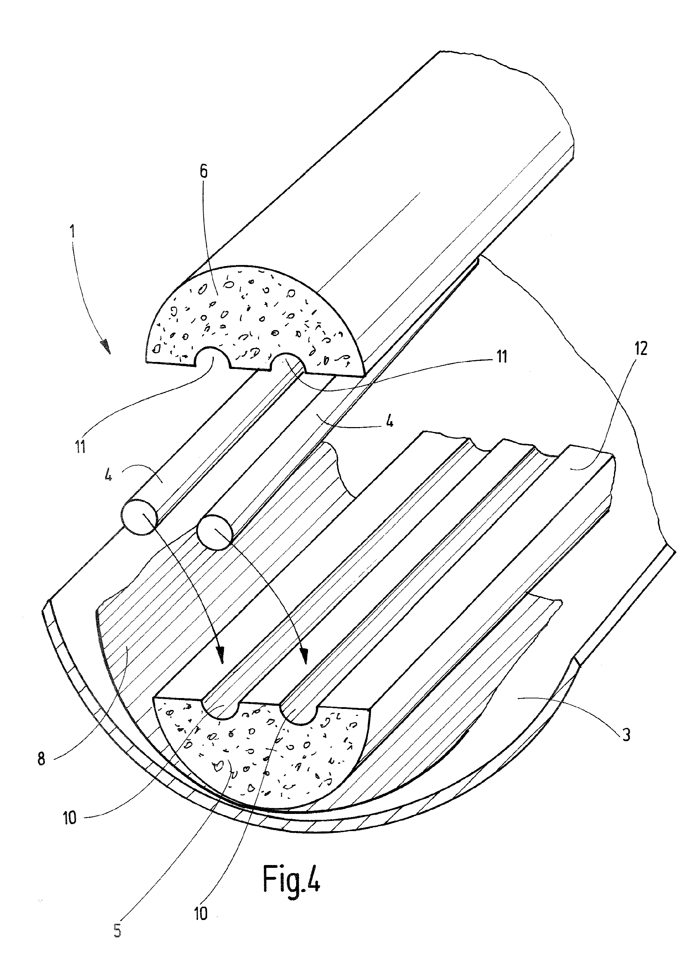

Aus den Explosionsdarstellungen in den Fig. 3 und 4 geht hervor, dass die Rohre 4 passgenau in die Längsrinnen 10 eingesetzt werden. In der ersten Ausführungsform verläuft die Längsrinne 10, wie Fig. 3 zeigt, längs und mittig der Isolierteile 5, 6, die aus PUR-Schaum sind und in herkömmlicher Weise hergestellt werden, wohingegen in der zweiten Ausführungsform, die Fig. 4 zeigt, die Längsrinnen 10 beabstandet und parallel zueinander verlaufen. Bei beiden Ausführungsformen verlaufen die Längsrinnen 10 auf der der bogenförmigen Seite der Isolierteile 5, 6 abgewandten planen Seite. Die Isolierteile 5,6 und die Längsrinnen 10 sind zueinander korrespondierend angeordnet.

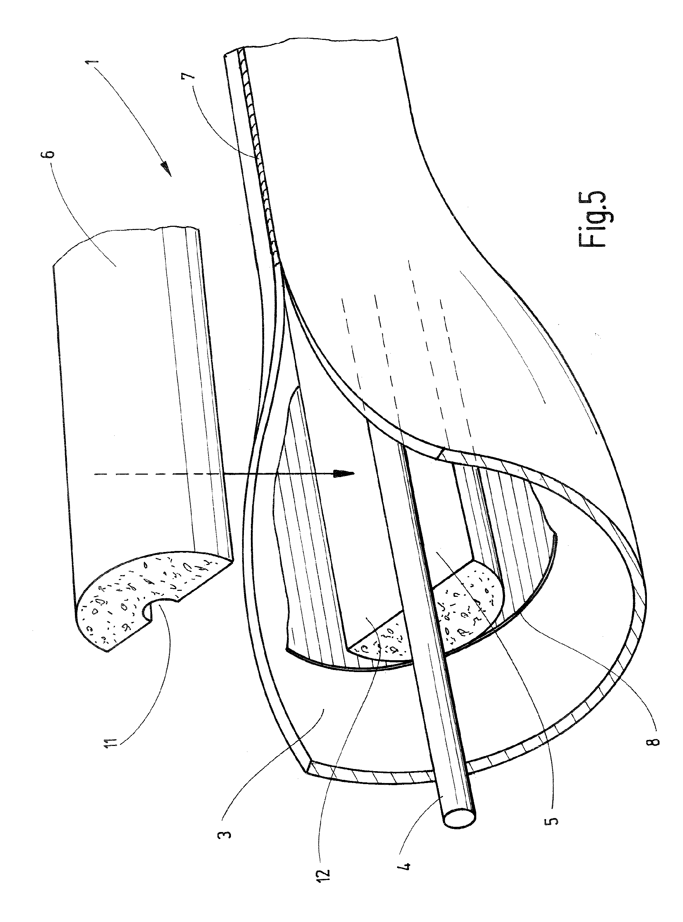

Fig. 5 zeigt die Schritte der Herstellung der Rohrleitung 1. Nachdem die in den Fig. 3 und 4 gezeigten Isolierteile 5, 6 in herkömmlicher Weise hergestellt worden sind, werden in die Längsrinnen 10 des Isolierteiles 5 das Rohr 4 eingesetzt und danach die beiden Isolierteile 5, 6 zusammengefügt. Dann wird das so entstandene Gebilde, bestehend aus den beiden Isolierteilen 5, 6 und dem Rohr 4, in herkömmlicher Weise von einer Sauerstoffsperrschicht 8 umschlossen. In einem weiteren Schritt erfolgt die Ummantelung der zusammengefügten und nunmehr mit der Sauerstoffsperrschicht 8 versehenen Isolierteile 5, 6 mit dem Mantelrohr 3, wobei das Mantelrohr 3 mittels einer Schweißnaht 7 geschlossen wird und die Ummantelung in herkömmlicher Weise erfolgen kann.

Alternativ kann auch die Schweißnaht 7 eines schon bestehenden Mantelrohres 3 getrennt werden, um danach die weiteren Schritte, d.h. die Einsetzung des Rohres 4 in die Längsrinnen 10 des Isolierteiles 5 und die Zusammenfügung der Isolierteile 5, 6 sowie die vollflächige Umschließung der zusammengefügten Isolierteile 5, 6 durch die Sauerstoffsperrschicht 8 folgen zu lassen. Der letzte Schritt der Herstellung der Rohrleitung 1 stellt schließlich die Ummantelung und das Schließen des Mantelrohres 3 mittels der Schweißnaht 7 dar.

Die vorliegende Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen. Beispielsweise können für das Mantelrohr 3 verschiedene Werkstoffe verwendet werden. Als probates Mantelrohr 3 bietet sich ein PE (Polyethylen)-Rohr an.

### Bezugszeichenliste:

- 1: Rohrleitung
- 2: Isolierung
- 3: Mantelrohr
- 4: Rohr
- 5, 6: Isolierteile
- 7: Schweißnaht
- 8: Sauerstoffsperrschicht
- 9: Trennfuge
- 10: Längsrinne

## Patentansprüche

1. Rohrleitung (1), insbesondere für den Transport von Heizungs- und Kühlflüssigkeit, mit wenigstens einem von einer Isolierung (2) und einem Mantelrohr (3) umschlossenen Rohr (4),
**dadurch gekennzeichnet,**
**dass** das Rohr (4) als Verbundrohr und die Isolierung (2) aus mindestens zwei miteinander verbundenen Isolierteilen (5,6) gebildet ist.

2. Leitung nach Anspruch 1,
**dadurch gekennzeichnet,**
**dass** in das Rohr (4) ein Kupfer- oder Al-Band, ein Datenkabel, eine Begleitheizung oder dergl. integriert ist.

3. Leitung nach Anspruch 1 oder 2,
**dadurch gekennzeichnet,**
**dass** das Isolierteil (5,6) in Form einer Zylinderhälfte gebildet ist und mit einer Längsrinne (10) versehen ist.

4. Leitung nach einem der Ansprüche 1 bis 3,
**dadurch gekennzeichnet,**
**dass** zwischen Mantelrohr (3) und Isolierung (2) eine Sauerstoffsperrschicht (8) ausgebildet ist.

5. Leitung nach einem der Ansprüche 1 bis 4,
**dadurch gekennzeichnet,**
**dass** das Verbundrohr als Alu-Verbundrohr ausgebildet ist.

6. Leitung nach Anspruch 4 oder 5,
**dadurch gekennzeichnet,**
**dass** die Sauerstoffsperrschicht (8) eine Alufolie ist.

7. Leitung nach einem der vorhergehenden Ansprüche,
**dadurch gekennzeichnet,**
**dass** das Rohr (4) mit zwei Verbundrohren versehen ist.

8. Leitung nach einem der Ansprüche 4 bis 7,
**dadurch gekennzeichnet,**
**dass** das Isolierteil (5,6) in Form einer Zylinderhälfte gebildet ist und mit zwei Längsrinnen (10) versehen ist.

9. Leitung nach einem der vorhergehenden Ansprüche,
**dadurch gekennzeichnet,**
**dass** längs des Mantelrohres (3) eine Schweißnaht (7) ausgebildet ist.

10. Leitung nach einem der vorhergehenden Ansprüche,
**dadurch gekennzeichnet,**
**dass** die Isolierung (2) aus PUR-Schaum gebildet ist.

11. Verfahren zur Herstellung einer Rohrleitung gemäß einem der Ansprüche 1 bis 10 mit folgenden Verfahrensschritten:
a) Erstellung von zwei Isolierteilen (5,6),
b) Einsetzung eines Rohres (4) in eine Längsrinne (10,11) eines Isolierteiles (5,6),
c) Zusammenfügen der Isolierteile (5,6),
d) Ummantelung der Isolierteile (5,6) mit einem Mantelrohr (3), wobei das Mantelrohr (3) mittels einer Schweißnaht (7) geschlossen wird.

12. Verfahren nach Anspruch 11,
**dadurch gekennzeichnet,**
**dass** zwischen Verfahrensschritt c) und Verfahrensschritt d) das Gebilde aus den Isolierteilen (5,6) und dem Rohr (4) mit einer Sauerstoffsperrschicht (8) umschlossen wird.

13. Verfahren zur Herstellung einer Rohrleitung gemäß einem der Ansprüche 1 bis 10 mit folgenden Verfahrensschritten:
a) Erstellung eines eine Schweißnaht (7) aufweisenden Mantelrohres (3),
b) Trennung der Schweißnaht (7),
c) Einsetzung eines Rohres (4) in Längsrinnen (10,11) von Isolierteilen (5,6) und Zusammenfügung der Isolierteile (5,6),
d) Ummantelung der Isolierteile (5,6) mittels des Mantelrohres (3) und Schließen des Mantelrohres (3) mittels der Schweißnaht (7),

14. Verfahren nach Anspruch 13,
**dadurch gekennzeichnet,**
**dass** zwischen Verfahrensschritt c) und Verfahrensschritt d) die zusammengefügten Isolierteile (5,6) von einer Sauerstoffsperrschicht (8) umschlossen wird.
